# EUROPEAN PATENT APPLICATION

(11) **EP 4 456 464 A1**
(43) Date of publication of application: **30.10.2024**
(21) Application number: 22909987.4
(22) Date of filing: 20.12.2022
(51) Int. Cl.: H04L 1/18

(54) **HYBRID AUTOMATIC REPEAT REQUEST ACKNOWLEDGEMENT PROCESSING METHOD AND APPARATUS, AND USER EQUIPMENT**

(30) Priority: 23.12.2021 CN 202111593425
(71) Applicant: Vivo Mobile Communication Co., Ltd., Dongguan, Guangdong 523863 (CN)
(72) Inventor: LI, Na, Dongguan, Guangdong 523863 (CN)
(74) Representative: Lavoix
(86) International application number: PCT/CN2022/140293
(87) International publication number: WO 2023/116675

(57) **Abstract**

This application pertains to the field of communications technologies, and discloses a hybrid automatic repeat request acknowledgement processing method and apparatus, and a terminal. The hybrid automatic repeat request acknowledgement processing method in embodiments of this application includes: in a case that a first hybrid automatic repeat request acknowledgement HARQ-ACK and a second HARQ-ACK are located in one time unit and that a codebook used by the first HARQ-ACK is a first codebook, generating, by a terminal, HARQ-ACK information of the first HARQ-ACK and HARQ-ACK information of the second HARQ-ACK based on the first codebook, or generating HARQ-ACK information based on a priority of the first HARQ-ACK and a priority of the second HARQ-ACK.

## Description

### CROSS-REFERENCE TO RELATED APPLICATIONS

This application claims priority to Chinese Patent Application No. 202111593425.4, filed in China on December 23, 2021, which is incorporated herein by reference in its entirety.

### TECHNICAL FIELD

This application relates to the field of communications technologies, and specifically, to a hybrid automatic repeat request acknowledgement processing method and apparatus, and a terminal.

### BACKGROUND

Currently, in a feedback mechanism based on a one-shot hybrid automatic repeat request acknowledgment codebook (one-shot HARQ-ACK codebook), the used codebook may be referred to as a type (type) 3 codebook. In this feedback mechanism, hybrid automatic repeat request acknowledgment (Hybrid Automatic Repeat request Acknowledgment, HARQ-ACK) information is fed back for all possible codewords of all configured hybrid automatic repeat request (Hybrid Automatic Repeat request, HARQ) processes on all carriers currently configured for a terminal.

To reduce a size of the type 3 codebook, an enhanced type 3 codebook is also introduced in the feedback mechanism. A base station configures different enhanced type 3 codebooks by using higher layer parameters. Each codebook includes a specific serving cell index (serving cell index) and a HARQ process identifier configured by using radio resource control (Radio Resource Control, RRC) signaling. When performing a feedback, the terminal needs to feed back only a serving cell corresponding to the codebook and HARQ-ACK information corresponding to a HARQ process.

However, when two pieces of HARQ-ACK information need to be transmitted in a same time unit (slot/sub-slot), and one of the two pieces of HARQ-ACK information needs to be based on the type 3 codebook or the enhanced type 3 codebook, for example, when the terminal (User Equipment, UE) receives a unicast service and a multicast/groupcast service at the same time, how to perform a HARQ-ACK acknowledgement in this time unit has become an urgent problem to be resolved.

### SUMMARY

Embodiments of this application provide a hybrid automatic repeat request acknowledgement processing method and apparatus, and a terminal to resolve a problem of how to implement a feedback when two pieces of HARQ-ACK information need to be transmitted in a same time unit and at least one piece of HARQ-ACK information is generated based on a specific codebook.

According to a first aspect, a hybrid automatic repeat request acknowledgement processing method is provided. The method includes:
in a case that a first hybrid automatic repeat request acknowledgement HARQ-ACK and a second HARQ-ACK are located in one time unit and that a codebook used by the first HARQ-ACK is a first codebook, generating, by a terminal, HARQ-ACK information of the first HARQ-ACK and HARQ-ACK information of the second HARQ-ACK based on the first codebook, or generating HARQ-ACK information based on a priority of the first HARQ-ACK and a priority of the second HARQ-ACK.

According to a second aspect, a hybrid automatic repeat request acknowledgement processing apparatus is provided. The apparatus includes:
a first processing module, configured to: in a case that a first HARQ-ACK and a second HARQ-ACK are located in one time unit and that a codebook used by the first HARQ-ACK is a first codebook, generate HARQ-ACK information of the first HARQ-ACK and HARQ-ACK information of the second HARQ-ACK based on the first codebook, or generate HARQ-ACK information based on a priority of the first HARQ-ACK and a priority of the second HARQ-ACK.

According to a third aspect, a terminal is provided. The terminal includes a processor and a memory. The memory stores a program or instructions capable of running on the processor. When the program or instructions are executed by the processor, the steps of the method according to the first aspect are implemented.

According to a fourth aspect, a terminal is provided. The terminal includes a processor and a communication interface. The processor is configured to: in a case that a first HARQ-ACK and a second HARQ-ACK are located in one time unit and that a codebook used by the first HARQ-ACK is a first codebook, generate HARQ-ACK information of the first HARQ-ACK and HARQ-ACK information of the second HARQ-ACK based on the first codebook, or generate HARQ-ACK information based on a priority of the first HARQ-ACK and a priority of the second HARQ-ACK.

According to a fifth aspect, a hybrid automatic repeat request acknowledgement processing system is provided and includes a terminal and a network-side device. The terminal may be configured to perform the steps of the hybrid automatic repeat request acknowledgement processing method according to the first aspect.

According to a sixth aspect, a readable storage medium is provided. The readable storage medium stores a program or instructions. When the program or instructions are executed by a processor, the steps of the method according to the first aspect are implemented.

According to a seventh aspect, a chip is provided. The chip includes a processor and a communication interface. The communication interface is coupled to the processor. The processor is configured to run a program or instructions to implement the method according to the first aspect.

According to an eighth aspect, a computer program or program product is provided. The computer program or program product is stored in a storage medium. The computer program or program product is executed by at least one processor to implement the steps of the hybrid automatic repeat request acknowledgement processing method according to the first aspect.

In the embodiments of this application, in the case that the first HARQ-ACK and the second HARQ-ACK are located in one time unit and that the codebook used by the first HARQ-ACK is the first codebook, one manner is to generate the HARQ-ACK information of the first HARQ-ACK and the HARQ-ACK information of the second HARQ-ACK only based on the first codebook to reduce redundant information of the HARQ-ACK acknowledgement; and one manner is to generate the HARQ-ACK information based on the priority of the first HARQ-ACK and the priority of the second HARQ-ACK to ensure reliability of a higher-priority HARQ-ACK.

### BRIEF DESCRIPTION OF DRAWINGS

FIG. 1 is a block diagram of a wireless communications system;
FIG. 2 is a schematic flowchart of a method according to an embodiment of this application;
FIG. 3 is a schematic diagram of an application scenario according to an embodiment of this application;
FIG. 4 is a schematic diagram of a modular structure of an apparatus according to an embodiment of this application;
FIG. 5 is a schematic diagram of a structure of a communication device according to an embodiment of this application; and
FIG. 6 is a schematic diagram of a structure of a terminal according to an embodiment of this application.

### DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by a person of ordinary skill in the art based on the embodiments of this application shall fall within the protection scope of this application.

The terms "first", "second", and the like in this specification and claims of this application are used to distinguish between similar objects instead of describing a specific order or sequence. It should be understood that the terms used in this way are interchangeable in appropriate circumstances, so that the embodiments of this application can be implemented in other orders than the order illustrated or described herein. In addition, objects distinguished by "first" and "second" usually fall within one class, and a quantity of objects is not limited. For example, there may be one or more first objects. In addition, the term "and/or" in the specification and claims indicates at least one of connected objects, and the character "/" generally represents an "or" relationship between associated objects.

It should be noted that technologies described in the embodiments of this application are not limited to a long term evolution (Long Term Evolution, LTE)/LTE-Advanced (LTE-Advanced, LTE-A) system, and can also be used in other wireless communications systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are usually used interchangeably. The described technologies may be used for the foregoing systems and radio technologies, and may also be used for other systems and radio technologies. However, in the following descriptions, the new radio (New Radio, NR) system is described for an illustrative purpose, and NR terms are used in most of the following descriptions. These technologies may also be applied to other applications than an NR system application, for example, a 6th Generation (6th Generation, 6G) communications system.

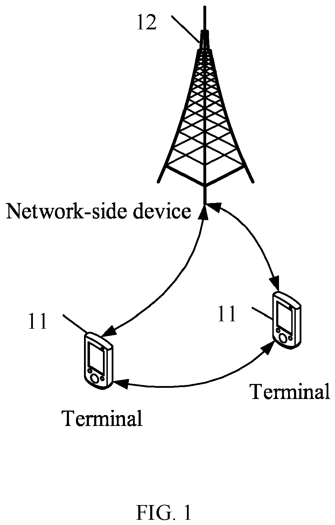

FIG. 1 is a block diagram of a wireless communications system to which an embodiment of this application may be applied. The wireless communications system includes a terminal 11 and a network-side device 12. The terminal 11 may be a terminal-side device such as a mobile phone, a tablet personal computer (Tablet Personal Computer), a laptop computer (Laptop Computer) or a notebook computer, a personal digital assistant (Personal Digital Assistant, PDA), a palmtop computer, a netbook, an ultra-mobile personal computer (Ultra-Mobile Personal Computer, UMPC), a mobile Internet device (Mobile Internet Device, MID), an augmented reality (augmented reality, AR) or virtual reality (virtual reality, VR) device, a robot, a wearable device (Wearable Device), vehicle user equipment (Vehicle User Equipment, VUE), pedestrian user equipment (Pedestrian User Equipment, PUE), a smart home (a home device having a wireless communication function, such as a refrigerator, a television, a washing machine, or furniture), a game console, a personal computer (Personal Computer, PC), a teller machine, or a self-service machine. The wearable device includes a smartwatch, a smart band, a smart headphone, smart glasses, smart jewelry (a smart bracelet, a smart wrist chain, a smart ring, a smart necklace, a smart anklet, a smart ankle chain, or the like), a smart wristband, smart clothing, or the like. It should be noted that a specific type of the terminal 11 is not limited in the embodiments of this application. The network-side device 12 may include an access network device or a core network device. The access network device may also be referred to as a radio access network device, a radio access network (Radio Access Network, RAN), a radio access network function, or a radio access network element. The access network device may include a base station, a wireless local area network (Wireless Local Area Network, WLAN) access point, a Wi-Fi node, or the like. The base station may be referred to as a NodeB, an evolved NodeB (eNB), an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a transmission and reception point (Transmitting Receiving Point, TRP), or another appropriate term in the art. As long as the same technical effect is achieved, the base station is not limited to specific technical terms. It should be noted that in the embodiments of this application, only a base station in an NR system is used as an example for description, but a specific type of the base station is not limited.

A hybrid automatic repeat request acknowledgement processing method and apparatus, and a terminal provided in the embodiments of this application are hereinafter described in detail by using some embodiments and application scenarios thereof with reference to the accompanying drawings.

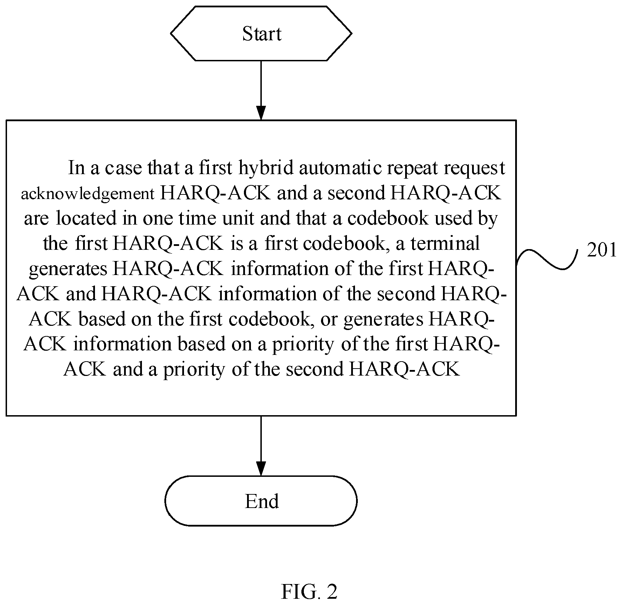

As shown in FIG. 2, a hybrid automatic repeat request acknowledgement processing method in an embodiment of this application includes the following step.

Step 201: In a case that a first hybrid automatic repeat request acknowledgement HARQ-ACK and a second HARQ-ACK are located in one time unit and that a codebook used by the first HARQ-ACK is a first codebook, a terminal generates HARQ-ACK information of the first HARQ-ACK and HARQ-ACK information of the second HARQ-ACK based on the first codebook, or generates HARQ-ACK information based on a priority of the first HARQ-ACK and a priority of the second HARQ-ACK.

Herein, the first HARQ-ACK and the second HARQ-ACK may be scheduled by information corresponding to the first HARQ-ACK and the second HARQ-ACK. For example, first information schedules the first HARQ-ACK, and second information schedules the second HARQ-ACK. Certainly, the second HARQ-ACK may alternatively be a semi-persistent scheduling (Semi-Persistent Scheduling, SPS) HARQ-ACK, that is, a HARQ-ACK that feeds back a physical downlink shared channel (Physical Downlink Shared Channel, PDSCH) not scheduled by a physical downlink control channel (Physical Downlink Control Channel, PDCCH), that is, an SPS PDSCH. The first HARQ-ACK requires that the first codebook should be used to generate a HARQ-ACK of a PDCCH/PDSCH corresponding to the first HARQ-ACK. For example, configured by using higher layer signaling, codebook types of the first HARQ-ACK include the first codebook and/or the first codebook triggered by downlink control information (Downlink Control Information, DCI). The second HARQ-ACK requires that the first codebook or another codebook should be used to generate a HARQ-ACK of a PDCCH/PDSCH corresponding to the second HARQ-ACK.

In this way, according to step 201, in the case that the first HARQ-ACK and the second HARQ-ACK are located in one time unit and that the codebook used by the first HARQ-ACK is the first codebook, one manner is that the terminal generates the HARQ-ACK information of the first HARQ-ACK and the HARQ-ACK information of the second HARQ-ACK only based on the first codebook to reduce redundant information of the HARQ-ACK acknowledgement; and one manner is that the terminal generates the HARQ-ACK information based on the priority of the first HARQ-ACK and the priority of the second HARQ-ACK to ensure reliability of a higher-priority HARQ-ACK.

As should be known, "the first HARQ-ACK and the second HARQ-ACK are in one time unit" may be understood as "the first HARQ-ACK and the second HARQ-ACK are triggered/scheduled in one time unit".

In this embodiment, if a priority of a HARQ-ACK is higher, it indicates that the HARQ-ACK is fed back preferentially. In this embodiment, the priority of the HARQ-ACK may be represented by a priority index, such as 0 or 1. For example, a same priority index means a same priority. If the priority index value is larger, it indicates that the priority is higher.

Optionally, in this embodiment, the first HARQ-ACK is a unicast HARQ-ACK, and the second HARQ-ACK is a multicast HARQ-ACK. The first HARQ-ACK is a unicast (unicast) HARQ-ACK, that is, a HARQ-ACK that feeds back a unicast PDCCH/PDSCH, or a HARQ-ACK triggered/scheduled by a unicast PDCCH/PDSCH. The second HARQ-ACK is a groupcast (groupcast) or multicast (multicast) or group-common (group-common) HARQ-ACK, that is, a HARQ-ACK that feeds back a groupcast/multicast/group-common PDCCH/PDSCH, or a HARQ-ACK triggered/scheduled by a groupcast/multicast/group-common PDCCH/PDSCH. Certainly, the first HARQ-ACK may alternatively be a multicast HARQ-ACK, and the second HARQ-ACK may alternatively be a unicast HARQ-ACK.

It should be noted that multicast in the present invention may also be referred to as groupcast or group-common transmission. The terms are not distinguished in the present invention.

Optionally, in this embodiment, the first codebook is a type 3 codebook or an enhanced type 3 codebook.

For example, in a time unit (such as a slot/sub-slot), if the terminal is triggered to feed back a unicast HARQ-ACK (first HARQ-ACK), and the unicast HARQ-ACK uses the type 3 codebook or the enhanced type 3 codebook (first codebook), when the terminal is also triggered/scheduled to feed back a multicast HARQ-ACK (second HARQ-ACK) in this time unit, and the multicast HARQ-ACK uses a type 1 codebook or a type 2 codebook (second codebook), the terminal performs a feedback in the following manners:
Manner 1: The terminal generates HARQ-ACK information of the unicast HARQ-ACK and HARQ-ACK information of the multicast HARQ-ACK only based on the type 3 codebook or the enhanced type 3 codebook, that is, the terminal generates the type 3 codebook or the enhanced type 3 codebook based on a serving cell and a HARQ process. For a HARQ process (HARQ process number), if the terminal receives a corresponding PDCCH/PDSCH (regardless of unicast or multicast), the terminal sets, based on a decoding result of the PDCCH/PDSCH, HARQ-ACK information corresponding to the HARQ process, and sets an ACK if the decoding succeeds, or else sets a NACK. Herein, the codebook of the unicast HARQ-ACK generated and fed back by the terminal may also include HARQ-ACK information of a multicast PDCCH/PDSCH.
Manner 2: The terminal generates HARQ-ACK information based on a priority of the unicast HARQ-ACK and a priority of the multicast HARQ-ACK.

In this embodiment, the generating HARQ-ACK information of the first HARQ-ACK and HARQ-ACK information of the second HARQ-ACK based on the first codebook may be understood as generating, for the first HARQ-ACK and the second HARQ-ACK by using the first codebook, HARQ-ACK information that is fed back.

Certainly, in this embodiment, in the case that the first HARQ-ACK and the second HARQ-ACK are located in one time unit and that the codebook used by the first HARQ-ACK is the first codebook, the terminal generates the HARQ-ACK information of the first HARQ-ACK and the HARQ-ACK information of the second HARQ-ACK based on the first codebook in a case that a first resource overlaps a second resource. In a case that the first resource does not overlap the second resource, the terminal generates respective HARQ-ACK information.

Therefore, optionally, that a terminal generates HARQ-ACK information of the first HARQ-ACK and HARQ-ACK information of the second HARQ-ACK based on the first codebook includes:
based on a HARQ process identifier, in a case that a corresponding physical downlink shared channel PDSCH or physical downlink control channel PDCCH is received, the terminal generates acknowledgement or negative acknowledgement information according to a decoding result of the PDSCH or the PDCCH; or in a case that a corresponding PDSCH or PDCCH is not received, generates negative acknowledgement information.

In other words, when constructing the HARQ-ACK information corresponding to the first codebook, for a HARQ process identifier (HARQ process ID, which can also represent a HARQ process number), if the terminal receives the PDSCH/PDCCH corresponding to the HARQ process ID, regardless of whether the PDSCH/PDCCH is unicast or groupcast, the terminal generates acknowledgement information ACK or negative acknowledgement information NACK according to the decoding result of the PDSCH/PDCCH; or if the terminal does not receive the PDSCH/PDCCH corresponding to the HARQ process ID, regardless of whether the PDSCH/PDCCH is unicast or groupcast, the terminal generates a NACK.

Specifically, when the decoding result of the PDSCH/PDCCH indicates that the decoding succeeds, an ACK is generated; or when the decoding result of the PDSCH/PDCCH indicates that the decoding fails, a NACK is generated. When the corresponding PDCCH/PDSCH is not received, a NACK is generated.

Optionally, that a terminal generates HARQ-ACK information of the first HARQ-ACK and HARQ-ACK information of the second HARQ-ACK based on the first codebook further includes:
the terminal transmits the generated HARQ-ACK information of the first HARQ-ACK and HARQ-ACK information of the second HARQ-ACK by using a first resource, where
the first resource is a transmission resource for the first HARQ-ACK, or
the first resource is a transmission resource for the unicast HARQ-ACK.

In other words, for the HARQ-ACK information generated in manner 1 in the foregoing example, the transmission resource for the first HARQ-ACK can be used to complete the feedback.

Optionally, the priority of the first HARQ-ACK is the same as the priority of the second HARQ-ACK.

In addition, considering the enhanced type 3 codebook, each codebook includes a specific serving cell index and a HARQ process ID. Therefore, optionally, in this embodiment, the first HARQ-ACK and the second HARQ-ACK are located in one time unit, and the codebook used by the first HARQ-ACK is the enhanced type 3 codebook, and the method further includes at least one of the following:
if HARQ process identifiers corresponding to the enhanced type 3 codebook include all HARQ process identifiers corresponding to the second HARQ-ACK, the terminal generates the HARQ-ACK information of the first HARQ-ACK and the HARQ-ACK information of the second HARQ-ACK based on the enhanced type 3 codebook, or generates the HARQ-ACK information based on the priority of the first HARQ-ACK and the priority of the second HARQ-ACK; and
if HARQ process identifiers corresponding to the enhanced type 3 codebook do not include all HARQ process identifiers corresponding to the second HARQ-ACK, the terminal generates the HARQ-ACK information of the first HARQ-ACK based on the enhanced type 3 codebook, and generates the HARQ-ACK information of the second HARQ-ACK based on a second codebook, where the second codebook is a codebook used by the second HARQ-ACK as indicated by a network-side device.

In other words, when the first codebook is the enhanced type 3 codebook, the terminal determines whether the HARQ process IDs corresponding to the enhanced type 3 codebook include the HARQ process IDs corresponding to the second HARQ-ACK;
when the HARQ process IDs corresponding to the enhanced type 3 codebook include all the HARQ process IDs corresponding to the second HARQ-ACK, the terminal generates the HARQ-ACK information of the first HARQ-ACK and the HARQ-ACK information of the second HARQ-ACK based on the enhanced type 3 codebook, or generates the HARQ-ACK information based on the priority of the first HARQ-ACK and the priority of the second HARQ-ACK; and
when the HARQ process IDs corresponding to the enhanced type 3 codebook do not include all the HARQ process IDs (that is, at least one HARQ process ID corresponding to the second HARQ-ACK is not included in the HARQ process IDs corresponding to the enhanced type 3 codebook) corresponding to the second HARQ-ACK, the terminal generates respective HARQ-ACK information based on respective codebooks of the HARQ-ACKs.

For example, in a time unit (slot/sub-slot), if the terminal is triggered/scheduled to feed back a unicast HARQ-ACK (first HARQ-ACK), and the unicast HARQ-ACK uses the enhanced type 3 codebook, when the terminal is also triggered/scheduled to feed back a multicast HARQ-ACK (second HARQ-ACK) in the time unit, and the multicast HARQ-ACK uses a type 1 or type 2 codebook, the terminal performs a feedback according to the following manner:
the terminal determines whether the HARQ process IDs corresponding to the enhanced type 3 codebook include the HARQ process IDs corresponding to the second HARQ-ACK;
when the HARQ process IDs corresponding to the enhanced type 3 codebook include all the HARQ process IDs corresponding to the second HARQ-ACK, the terminal can generate the HARQ-ACK information according to manner 1 or manner 2 in the foregoing example; and
when the HARQ process IDs corresponding to the enhanced type 3 codebook do not include all the HARQ process IDs corresponding to the second HARQ-ACK, the terminal generates HARQ-ACK information of the unicast HARQ-ACK based on the enhanced type 3 codebook, and generates HARQ-ACK information of the multicast HARQ-ACK based on the type 1 codebook.

Herein, in a specific implementation of generating the HARQ-ACK information of the first HARQ-ACK and the HARQ-ACK information of the second HARQ-ACK based on the enhanced type 3 codebook, that is, an implementation of generating the HARQ-ACK information of the first HARQ-ACK and the HARQ-ACK information of the second HARQ-ACK by the terminal based on the first codebook, the first codebook is an implementation of the enhanced type 3 codebook. Details are not described herein.

It should be noted that, in this embodiment, that the HARQ process IDs corresponding to the enhanced type 3 codebook include all the HARQ process IDs corresponding to the second HARQ-ACK is determined on a basis that the HARQ process IDs corresponding to the enhanced type 3 codebook and the HARQ process IDs corresponding to the second HARQ-ACK belong to a same serving cell. If the HARQ process IDs corresponding to the enhanced type 3 codebook and the HARQ process IDs corresponding to the second HARQ-ACK belong to different serving cells, even if the HARQ process IDs are the same, the HARQ process IDs corresponding to the enhanced type 3 codebook do not include the HARQ process IDs corresponding to the second HARQ-ACK, that is, only same HARQ process IDs in a same serving cell belong to a same HARQ process.

It should be further noted that, when some HARQ process IDs corresponding to the second HARQ-ACK are included in the HARQ process IDs corresponding to the enhanced type 3 codebook, when the terminal generates the enhanced type 3 codebook, if a HARQ process ID corresponds to the second HARQ-ACK, the terminal may set an ACK/NACK or a NACK according to a decoding result.

In addition, optionally, in this embodiment, that the terminal generates the HARQ-ACK information based on the priority of the first HARQ-ACK and the priority of the second HARQ-ACK includes at least one of the following:
in a case that the priority of the first HARQ-ACK is higher than or equal to the priority of the second HARQ-ACK, the terminal generates the HARQ-ACK information of the first HARQ-ACK and the HARQ-ACK information of the second HARQ-ACK based on the first codebook; and
in a case that the priority of the first HARQ-ACK is lower than the priority of the second HARQ-ACK, the terminal generates the HARQ-ACK information of the first HARQ-ACK based on the first codebook, and generates the HARQ-ACK information of the second HARQ-ACK based on the second codebook, where the second codebook is the codebook used by the second HARQ-ACK as indicated by the network-side device.

Herein, the HARQ-ACK information is generated in different manners based on whether the priority of the first HARQ-ACK is higher than or equal to the priority of the second HARQ-ACK, or whether the priority of the first HARQ-ACK is lower than the priority of the second HARQ-ACK.

As a continuation of manner 2 in the foregoing example, when the priority of the first HARQ-ACK is higher than or equal to the priority of the second HARQ-ACK, the HARQ-ACK information is generated according to manner 1; or when the priority of the first HARQ-ACK is lower than the priority of the second HARQ-ACK, the HARQ-ACK information of the unicast HARQ-ACK is generated based on the type 3 codebook or the enhanced type 3 codebook, and the HARQ-ACK information of the multicast HARQ-ACK is generated based on the type 1 or type 2 codebook.

Optionally, in this embodiment, that the terminal generates the HARQ-ACK information based on the priority of the first HARQ-ACK and the priority of the second HARQ-ACK includes at least one of the following:
in a case that the priority of the first HARQ-ACK is equal to the priority of the second HARQ-ACK, the terminal generates the HARQ-ACK information of the first HARQ-ACK and the HARQ-ACK information of the second HARQ-ACK based on the first codebook; and
in a case that the priority of the first HARQ-ACK is not equal to the priority of the second HARQ-ACK, the terminal generates the HARQ-ACK information of the first HARQ-ACK based on the first codebook, and generates the HARQ-ACK information of the second HARQ-ACK based on the second codebook, where the second codebook is the codebook used by the second HARQ-ACK as indicated by the network-side device.

Herein, the HARQ-ACK information is generated in different manners based on whether the priority of the first HARQ-ACK is equal to the priority of the second HARQ-ACK, or whether the priority of the first HARQ-ACK is not equal to the priority of the second HARQ-ACK.

As a continuation of manner 2 in the foregoing example, when the priority of the first HARQ-ACK is equal to the priority of the second HARQ-ACK, the HARQ-ACK information is generated according to manner 1; or when the priority of the first HARQ-ACK is not equal to the priority of the second HARQ-ACK, the HARQ-ACK information of the unicast HARQ-ACK is generated based on the type 3 codebook or the enhanced type 3 codebook, and the HARQ-ACK information of the multicast HARQ-ACK is generated based on the type 1 or type 2 codebook.

In addition, optionally, that the terminal generates the HARQ-ACK information of the first HARQ-ACK based on the first codebook, and generates the HARQ-ACK information of the second HARQ-ACK based on the second codebook further includes:
in a case that a first resource overlaps a second resource, the terminal transmits the HARQ-ACK information of the second HARQ-ACK by using the second resource; and
in a case that the first resource does not overlap the second resource, the terminal transmits the HARQ-ACK information of the first HARQ-ACK by using the first resource, and transmits the HARQ-ACK information of the second HARQ-ACK by using the second resource, where
the first resource is a transmission resource for the first HARQ-ACK; and
the second resource is a transmission resource for the second HARQ-ACK.

In other words, for HARQ-ACKs with different priorities, if respective HARQ-ACK codebooks are generated separately, when the first resource overlaps the second resource, the terminal transmits only the generated HARQ-ACK information of the second HARQ-ACK by using the second resource. In this case, the terminal discards the HARQ-ACK information of the first HARQ-ACK. When the first resource does not overlap the second resource, the terminal transmits the generated HARQ-ACK information of the first HARQ-ACK by using the first resource, and transmits the generated HARQ-ACK information of the second HARQ-ACK by using the second resource.

In this embodiment, the first resource and the second resource may be a physical uplink control channel (Physical Uplink Control Channel, PUCCH). Overlapping of the first resource and the second resource means overlapping of two PUCCH time domain resources. Non-overlapping of the first resource and the second resource means non-overlapping of two PUCCH time domain resources. Overlapping of the time domain resources includes partial overlapping or complete overlapping.

For example, as a continuation of manner 2 in the foregoing example, after the HARQ-ACK information of the unicast HARQ-ACK is generated based on the type 3 codebook or the enhanced type 3 codebook, and the HARQ-ACK information of the multicast HARQ-ACK is generated based on the type 1 or type 2 codebook, if the first resource overlaps the second resource, and the priority of the unicast HARQ-ACK is low, and the priority of the multicast HARQ-ACK is high, the terminal discards the generated HARQ-ACK information of the unicast HARQ-ACK, and transmits the generated HARQ-ACK information of the multicast HARQ-ACK; or if the first resource does not overlap the second resource, the terminal transmits the two pieces of generated HARQ-ACK information separately.

Certainly, if the first resource overlaps the second resource, and the priority of the unicast HARQ-ACK is high, and the priority of the multicast HARQ-ACK is low, the terminal transmits the generated HARQ-ACK information of the unicast HARQ-ACK, and discards the generated HARQ-ACK information of the multicast HARQ-ACK.

In addition, optionally, that the terminal generates the HARQ-ACK information of the first HARQ-ACK based on the enhanced type 3 codebook, and generates the HARQ-ACK information of the second HARQ-ACK based on a second codebook further includes at least one of the following:
the terminal determines a target resource based on whether the priority of the first HARQ-ACK is the same as the priority of the second HARQ-ACK, and transmits the HARQ-ACK information by using the target resource; and
the terminal transmits the HARQ-ACK information of the first HARQ-ACK by using a first resource, and transmits the HARQ-ACK information of the second HARQ-ACK by using a second resource, where
the first resource is a transmission resource for the first HARQ-ACK; and
the second resource is a transmission resource for the second HARQ-ACK.

In other words, when the first codebook is the enhanced type 3 codebook, the terminal determines whether the HARQ process IDs corresponding to the enhanced type 3 codebook include the HARQ process IDs corresponding to the second HARQ-ACK, and after the terminal generates respective HARQ-ACK information based on respective codebooks of the HARQ-ACKs if the HARQ process IDs corresponding to the enhanced type 3 codebook do not include all the HARQ process IDs corresponding to the second HARQ-ACK,
on one hand, the terminal can first determine the target resource based on whether the priority of the first HARQ-ACK is the same as the priority of the second HARQ-ACK, and therefore use the target resource for the feedback; and
on the other hand, the terminal uses respective transmission resources for the HARQ-ACKs to transmit respective HARQ-ACK information separately.

Optionally, that the terminal determines a target resource based on whether the priority of the first HARQ-ACK is the same as the priority of the second HARQ-ACK, and transmits the target information by using the target resource includes at least one of the following:
in a case that the priority of the first HARQ-ACK is different from the priority of the second HARQ-ACK, if the first resource overlaps the second resource, the terminal uses a resource for a HARQ-ACK with a higher priority as the target resource, and transmits HARQ-ACK information of the HARQ-ACK with the higher priority by using the target resource;
in a case that the priority of the first HARQ-ACK is different from the priority of the second HARQ-ACK, if the first resource does not overlap the second resource, the terminal transmits the HARQ-ACK information of the first HARQ-ACK by using the first resource, and transmits the HARQ-ACK information of the second HARQ-ACK by using the second resource; and
in a case that the priority of the first HARQ-ACK is the same as the priority of the second HARQ-ACK, the terminal selects the first resource, the second resource, or a third resource as the target resource, and transmits, by using the target resource, information obtained by concatenating the HARQ-ACK information of the first HARQ-ACK and the HARQ-ACK information of the second HARQ-ACK, where the third resource is determined based on a quantity of bits in the information obtained through concatenation.

Therefore, when the first codebook is the enhanced type 3 codebook, the terminal determines whether the HARQ process IDs corresponding to the enhanced type 3 codebook include the HARQ process IDs corresponding to the second HARQ-ACK, and after the terminal generates respective HARQ-ACK information based on respective codebooks of the HARQ-ACKs if the HARQ process IDs corresponding to the enhanced type 3 codebook do not include all the HARQ process IDs corresponding to the second HARQ-ACK,
if the priority of the first HARQ-ACK is different from the priority of the second HARQ-ACK, and the first resource overlaps the second resource, the terminal uses the resource for the HARQ-ACK with the higher priority as the target resource, and transmits the HARQ-ACK information of the HARQ-ACK with the higher priority in the first HARQ-ACK and the second HARQ-ACK by using the target resource, but discards HARQ-ACK information of a HARQ-ACK with a lower priority in the first HARQ-ACK and the second HARQ-ACK;
if the priority of the first HARQ-ACK is different from the priority of the second HARQ-ACK, and the first resource does not overlap the second resource, the terminal uses the first resource and the second resource as target resources for transmitting corresponding HARQ-ACK information separately; or
if the priority of the first HARQ-ACK is the same as the priority of the second HARQ-ACK, the terminal can select the first resource, the second resource, or the third resource as the target resource, and transmit the information obtained by concatenating the two pieces of generated HARQ-ACK information.

Herein, if the two HARQ-ACKs are respectively the unicast HARQ-ACK and the multicast HARQ-ACK, concatenating the two pieces of generated HARQ-ACK information is concatenating the HARQ-ACK information of the multicast HARQ-ACK after the HARQ-ACK information of the unicast HARQ-ACK.

It should be noted that in this embodiment, the third resource is also a PUCCH resource. The third resource may be determined based on a quantity of concatenated bits. Optionally, the third resource may be determined in a PUCCH resource configured for the unicast HARQ-ACK.

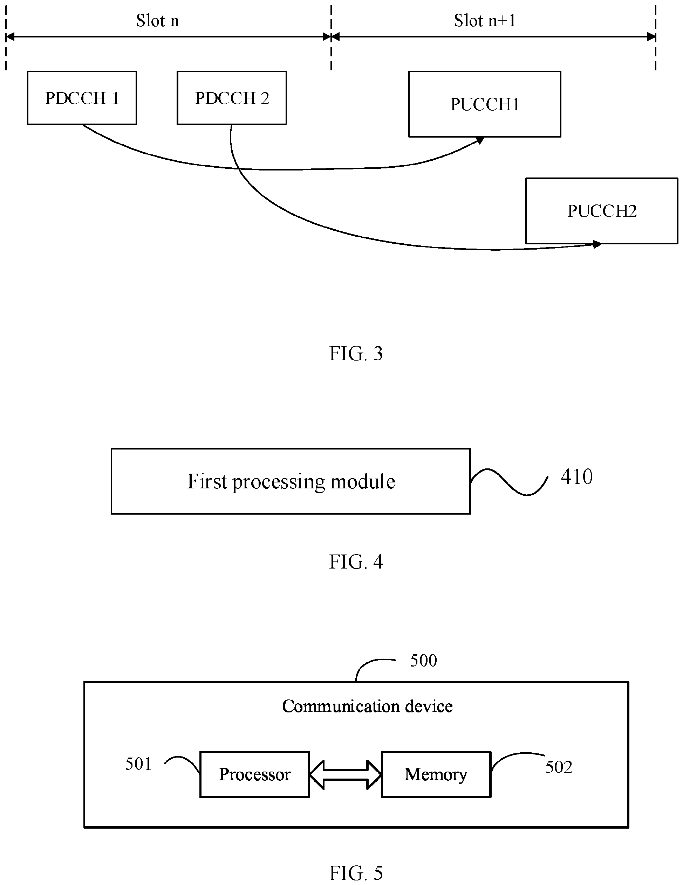

The following describes applications of the embodiments of this application with reference to specific scenarios:
As shown in FIG. 3, PDCCH 1 is a unicast PDCCH, and a HARQ-ACK (first HARQ-ACK) corresponding to PDCCH 1 is fed back in slot n+1; and PDCCH 2 is a multicast PDCCH, and a HARQ-ACK (second HARQ-ACK) corresponding to PDCCH 2 is also fed back in slot n+1. In other words, transmission resource PDCCH 1 for the HARQ-ACK corresponding to PUCCH 1 is in slot n+1, and transmission resource PUCCH 2 for the HARQ-ACK corresponding to PDCCH 2 is also in slot n+1. When a type 3 codebook (codebook) or an enhanced type 3 codebook is configured for a HARQ-ACK corresponding to a unicast PDCCH/PDSCH, a terminal may perform a feedback according to the following methods:
For the type 3 codebook:
Method 1-1: Regardless of whether a priority corresponding to the type 3 codebook (unicast HARQ-ACK) is low/high (small/large), and regardless of whether PUCCH 1 overlaps PUCCH 2 (the terminal does not need to determine whether the PUCCHs overlap), the terminal only constructs and transmits the type 3 codebook.

It should be noted that, herein the terminal only constructs and transmits the type 3 codebook. When the terminal constructs the type 3 codebook, as described above, in a process corresponding to a HARQ process, if the terminal receives a corresponding PDCCH/PDSCH (regardless of unicast or multicast), the terminal generates corresponding HARQ-ACK information according to a decoding result of the PDCCH/PDSCH.

Method 1-2: Regardless of whether a priority corresponding to the type 3 codebook (unicast HARQ-ACK) is a low/high priority, if PUCCH 1 overlaps PUCCH 2, the terminal only constructs and transmits the type 3 codebook. If PUCCH 1 does not overlap PUCCH 2, the terminal constructs and transmits HARQ-ACK information of the unicast HARQ-ACK and HARQ-ACK information of the multicast HARQ-ACK separately, that is, constructs and transmits the type 3 codebook and a multicast HARQ-ACK codebook separately.

It should be noted that, herein the terminal constructs and transmits the type 3 codebook. When the terminal constructs the type 3 codebook, as described above, if a PDCCH/PDSCH corresponding to a process corresponding to a HARQ process is multicast, the terminal may generate corresponding HARQ-ACK information or generate NACK information according to a decoding result of the PDCCH/PDSCH.

Method 2: If a priority of the unicast HARQ-ACK is higher than a priority of the multicast HARQ-ACK, the terminal only constructs and transmits the type 3 codebook. If the priority of the multicast HARQ-ACK is higher than the priority of the unicast HARQ-ACK, the terminal constructs and transmits HARQ-ACK information of the unicast HARQ-ACK and HARQ-ACK information of the multicast HARQ-ACK separately, that is, constructs and transmits the type 3 codebook and a multicast HARQ-ACK codebook separately.

Method 3: If a priority of the unicast HARQ-ACK is equal to a priority of the multicast HARQ-ACK, the terminal only constructs and transmits the type 3 codebook. If the priority of the multicast HARQ-ACK is different from the priority of the unicast HARQ-ACK, the terminal constructs and transmits HARQ-ACK information of the unicast HARQ-ACK and HARQ-ACK information of the multicast HARQ-ACK separately, that is, constructs and transmits the type 3 codebook and a multicast HARQ-ACK codebook separately. It should be noted that, herein when the type 3 codebook and the multicast HARQ-ACK codebook are constructed and transmitted separately, if PUCCH time domain resources for transmitting the two HARQ-ACKs overlap, the terminal needs to discard a PUCCH with a lower priority and HARQ-ACK information of the PUCCH with the lower priority, and transmit a PUCCH with a higher priority and HARQ-ACK information of the PUCCH with the higher priority.

For the enhanced type 3 codebook:
In addition to the foregoing methods 1-1 and 1-2 and method 2 (where the type 3 codebook needs to be replaced with the enhanced type 3 codebook), the following method may also be used:
Method 4: Based on whether a HARQ process ID corresponding to the multicast HARQ-ACK is included in HARQ process IDs corresponding to the enhanced type 3,
if HARQ process IDs corresponding to the multicast HARQ-ACK are all included in the HARQ process IDs included in the enhanced type 3, the foregoing method 1-1, method 1-2, or method 2 is used; or
if at least one HARQ process ID corresponding to the multicast HARQ-ACK is not included in the HARQ process IDs included in the enhanced type 3, HARQ-ACK information of the unicast HARQ-ACK and HARQ-ACK information of the multicast HARQ-ACK are constructed separately.

(1) When PUCCH 1 overlaps PUCCH 2, and priorities of the two PUCCHs are different (it may also be understood that priorities of the multicast HARQ-ACK and the unicast HARQ-ACK are different), the terminal discards a PUCCH with a lower priority and transmits a PUCCH with a higher priority. If priorities of the PUCCHs are the same, the HARQ-ACKs are multiplexed on one PUCCH, where the multicast HARQ-ACK is concatenated after the unicast HARQ-ACK.
(2) When PUCCH 1 does not overlap PUCCH 2, the terminal transmits the two PUCCHs separately.

It should be noted that, if some HARQ process IDs corresponding to the multicast HARQ-ACK are included in a unicast enhanced type 3 codebook, when the terminal constructs the enhanced type 3 codebook, if a PDCCH/PDSCH corresponding to a HARQ process is multicast, the terminal may generate ACK/NACK information according to a decoding result of the multicast PDCCH/PDSCH or directly generate NACK information.

In summary, in the method in the embodiments of this application, in the case that the first HARQ-ACK and the second HARQ-ACK are located in one time unit and that the codebook used by the first HARQ-ACK is the first codebook, one manner is to generate the HARQ-ACK information of the first HARQ-ACK and the HARQ-ACK information of the second HARQ-ACK only based on the first codebook to reduce redundant information of the HARQ-ACK acknowledgement; and one manner is to generate the HARQ-ACK information based on the priority of the first HARQ-ACK and the priority of the second HARQ-ACK to ensure reliability of a higher-priority HARQ-ACK.

The hybrid automatic repeat request acknowledgement processing method provided in the embodiments of this application may be performed by a hybrid automatic repeat request acknowledgement processing apparatus. A hybrid automatic repeat request acknowledgement processing apparatus provided in the embodiments of this application is described by assuming that the hybrid automatic repeat request acknowledgement processing apparatus performs the hybrid automatic repeat request acknowledgement processing method in the embodiments of this application.

As shown in FIG. 4, a hybrid automatic repeat request acknowledgement processing apparatus in an embodiment of this application includes:
a first processing module 410, configured to: in a case that a first HARQ-ACK and a second HARQ-ACK are located in one time unit and that a codebook used by the first HARQ-ACK is a first codebook, generate HARQ-ACK information of the first HARQ-ACK and HARQ-ACK information of the second HARQ-ACK based on the first codebook, or generate HARQ-ACK information based on a priority of the first HARQ-ACK and a priority of the second HARQ-ACK.

Optionally, the first codebook is a type 3 codebook or an enhanced type 3 codebook.

Optionally, the first HARQ-ACK and the second HARQ-ACK are located in one time unit, and the codebook used by the first HARQ-ACK is the enhanced type 3 codebook, and the apparatus further includes:
a second processing module, configured to: if HARQ process identifiers corresponding to the enhanced type 3 codebook include all HARQ process identifiers corresponding to the second HARQ-ACK, generate the HARQ-ACK information of the first HARQ-ACK and the HARQ-ACK information of the second HARQ-ACK based on the enhanced type 3 codebook, or generate the HARQ-ACK information based on the priority of the first HARQ-ACK and the priority of the second HARQ-ACK; or
if HARQ process identifiers corresponding to the enhanced type 3 codebook do not include all HARQ process identifiers corresponding to the second HARQ-ACK, generate the HARQ-ACK information of the first HARQ-ACK based on the enhanced type 3 codebook, and generate the HARQ-ACK information of the second HARQ-ACK based on a second codebook, where the second codebook is a codebook used by the second HARQ-ACK as indicated by a network-side device.

Optionally, the generating the HARQ-ACK information based on the priority of the first HARQ-ACK and the priority of the second HARQ-ACK includes at least one of the following:
in a case that the priority of the first HARQ-ACK is higher than or equal to the priority of the second HARQ-ACK, generating the HARQ-ACK information of the first HARQ-ACK and the HARQ-ACK information of the second HARQ-ACK based on the first codebook; and
in a case that the priority of the first HARQ-ACK is lower than the priority of the second HARQ-ACK, generating the HARQ-ACK information of the first HARQ-ACK based on the first codebook, and generating the HARQ-ACK information of the second HARQ-ACK based on the second codebook, where the second codebook is the codebook used by the second HARQ-ACK as indicated by the network-side device.

Optionally, the generating the HARQ-ACK information based on the priority of the first HARQ-ACK and the priority of the second HARQ-ACK includes at least one of the following:
in a case that the priority of the first HARQ-ACK is equal to the priority of the second HARQ-ACK, generating the HARQ-ACK information of the first HARQ-ACK and the HARQ-ACK information of the second HARQ-ACK based on the first codebook; and
in a case that the priority of the first HARQ-ACK is not equal to the priority of the second HARQ-ACK, generating the HARQ-ACK information of the first HARQ-ACK based on the first codebook, and generating the HARQ-ACK information of the second HARQ-ACK based on the second codebook, where the second codebook is the codebook used by the second HARQ-ACK as indicated by the network-side device.

Optionally, the apparatus further includes:
a first transmission module, configured to: in a case that a first resource overlaps a second resource, transmit the HARQ-ACK information of the second HARQ-ACK by using the second resource; and
a second transmission module, configured to: in a case that the first resource does not overlap the second resource, transmit the HARQ-ACK information of the first HARQ-ACK by using the first resource, and transmit the HARQ-ACK information of the second HARQ-ACK by using the second resource, where
the first resource is a transmission resource for the first HARQ-ACK; and
the second resource is a transmission resource for the second HARQ-ACK.

Optionally, the apparatus further includes at least one of the following:
a third transmission module, configured to determine a target resource based on whether the priority of the first HARQ-ACK is the same as the priority of the second HARQ-ACK, and transmit the HARQ-ACK information by using the target resource; and
a fourth transmission module, configured to transmit the HARQ-ACK information of the first HARQ-ACK by using a first resource, and transmit the HARQ-ACK information of the second HARQ-ACK by using a second resource, where
the first resource is a transmission resource for the first HARQ-ACK; and
the second resource is a transmission resource for the second HARQ-ACK.

Optionally, the third transmission module is further configured to perform at least one of the following:
in a case that the priority of the first HARQ-ACK is different from the priority of the second HARQ-ACK, if two PUCCH time domain resources overlap, using a resource for a HARQ-ACK with a higher priority as the target resource, and transmitting HARQ-ACK information of the HARQ-ACK with the higher priority by using the target resource;
in a case that the priority of the first HARQ-ACK is different from the priority of the second HARQ-ACK, if two PUCCH time domain resources do not overlap, transmitting the HARQ-ACK information of the first HARQ-ACK by using the first resource, and transmitting the HARQ-ACK information of the second HARQ-ACK by using the second resource; and
in a case that the priority of the first HARQ-ACK is the same as the priority of the second HARQ-ACK, selecting the first resource, the second resource, or a third resource as the target resource, and transmitting, by using the target resource, information obtained by concatenating the HARQ-ACK information of the first HARQ-ACK and the HARQ-ACK information of the second HARQ-ACK, where the third resource is determined based on a quantity of bits in the information obtained through concatenation.

Optionally, the first processing module includes:
a first processing submodule, configured to: based on a HARQ process identifier, in a case that a corresponding physical downlink shared channel PDSCH or physical downlink control channel PDCCH is received, generate acknowledgement or negative acknowledgement information according to a decoding result of the PDSCH or the PDCCH; or in a case that a corresponding PDSCH or PDCCH is not received, generate negative acknowledgement information.

Optionally, the apparatus further includes:
a fifth transmission module, configured to transmit the generated HARQ-ACK information of the first HARQ-ACK and HARQ-ACK information of the second HARQ-ACK by using a first resource, where
the first resource is a transmission resource for the first HARQ-ACK.

Optionally, the first HARQ-ACK is a unicast HARQ-ACK, and the second HARQ-ACK is a multicast HARQ-ACK.

In the case that the first HARQ-ACK and the second HARQ-ACK are located in one time unit and that the codebook used by the first HARQ-ACK is the first codebook, one manner is that the apparatus generates the HARQ-ACK information of the first HARQ-ACK and the HARQ-ACK information of the second HARQ-ACK only based on the first codebook to reduce redundant information of the HARQ-ACK acknowledgement; and one manner is that the apparatus generates the HARQ-ACK information based on the priority of the first HARQ-ACK and the priority of the second HARQ-ACK to ensure reliability of a higher-priority HARQ-ACK.

The hybrid automatic repeat request acknowledgement processing apparatus in this embodiment of this application may be an electronic device, for example, an electronic device with an operating system, or may be a component in an electronic device, for example, an integrated circuit or a chip. The electronic device may be a terminal, or may be other devices than a terminal. For example, the terminal may include but is not limited to the foregoing illustrated type of the terminal 11. The other devices may be a server, a network attached storage (Network Attached Storage, NAS), and the like. This is not specifically limited in this embodiment of this application.

The hybrid automatic repeat request acknowledgement processing apparatus provided in this embodiment of this application can implement each process implemented by the method embodiments in FIG. 2 and FIG. 3, with the same technical effect achieved. To avoid repetition, details are not described herein again.

Optionally, as shown in FIG. 5, an embodiment of this application further provides a communication device 500, including a processor 501 and a memory 502. The memory 502 stores a program or instructions capable of running on the processor 501. For example, when the communication device 500 is a terminal, and the program or instructions are executed by the processor 501, each step of the foregoing embodiment of the hybrid automatic repeat request acknowledgement processing method is implemented, with the same technical effect achieved.

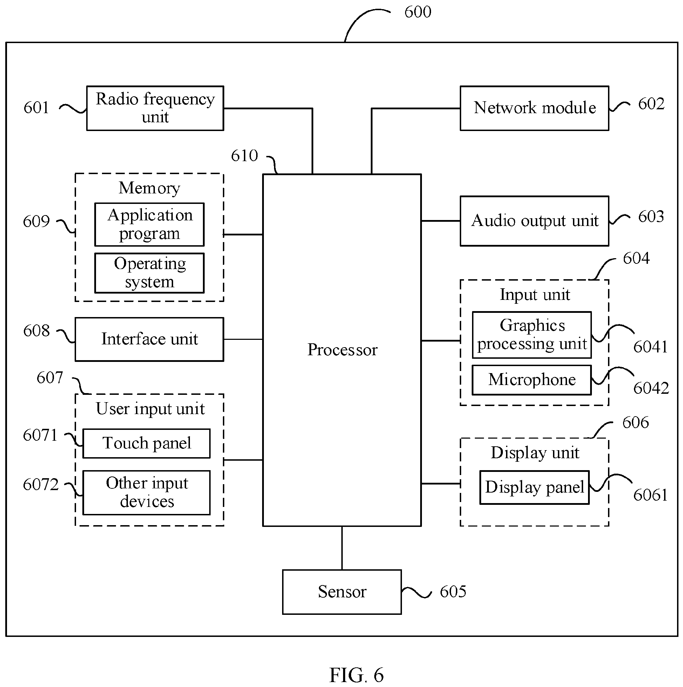

An embodiment of this application further provides a terminal, including a processor and a communication interface. The processor is configured to: in a case that a first hybrid automatic repeat request acknowledgement HARQ-ACK and a second HARQ-ACK are located in one time unit and that a codebook used by the first HARQ-ACK is a first codebook, generate HARQ-ACK information of the first HARQ-ACK and HARQ-ACK information of the second HARQ-ACK based on the first codebook, or generate HARQ-ACK information based on a priority of the first HARQ-ACK and a priority of the second HARQ-ACK. The terminal embodiment corresponds to the foregoing terminal-side method embodiment, and each implementation process and implementation of the foregoing method embodiment can be applied to the terminal embodiment, with the same technical effect achieved. Specifically, FIG. 6 is a schematic diagram of a hardware structure of a terminal for implementing an embodiment of this application.

The terminal 600 includes but is not limited to at least some components such as a radio frequency unit 601, a network module 602, an audio output unit 603, an input unit 604, a sensor 605, a display unit 606, a user input unit 607, an interface unit 608, a memory 609, and a processor 610.

A person skilled in the art may understand that the terminal 600 may further include a power supply (for example, a battery) supplying power to all components. The power supply may be logically connected to the processor 610 through a power management system. In this way, functions such as charge management, discharge management, and power consumption management are implemented by using the power management system. The terminal structure shown in FIG. 6 does not constitute a limitation on the terminal. The terminal may include more or fewer components than those shown in the figure, or some components are combined, or component arrangements are different. Details are not described herein again.

It should be understood that, in this embodiment of this application, the input unit 604 may include a graphics processing unit (Graphics Processing Unit, GPU) 6041 and a microphone 6042. The graphics processing unit 6041 processes image data of a still picture or video obtained by an image capture apparatus (such as a camera) in a video capture mode or an image capture mode. The display unit 606 may include a display panel 6061, and the display panel 6061 may be configured in a form of a liquid crystal display, an organic light-emitting diode, or the like. The user input unit 607 includes at least one of a touch panel 6071 and other input devices 6072. The touch panel 6071 is also referred to as a touchscreen. The touch panel 6071 may include two parts: a touch detection apparatus and a touch controller. The other input devices 6072 may include but are not limited to a physical keyboard, a function button (such as a volume control button or a power button), a trackball, a mouse, and a joystick. Details are not described herein again.

In this embodiment of this application, after receiving downlink data from a network-side device, the radio frequency unit 601 may transmit the downlink data to the processor 610 for processing. In addition, the radio frequency unit 601 may send uplink data to the network-side device. Usually, the radio frequency unit 601 includes but is not limited to an antenna, an amplifier, a transceiver, a coupler, a low noise amplifier, a duplexer, and the like.

The memory 609 may be configured to store software programs or instructions and various data. The memory 609 may primarily include a first storage area for storing programs or instructions and a second storage area for storing data. The first storage area may store an operating system, an application program or instructions required by at least one function (such as an audio play function and an image play function), and the like. In addition, the memory 609 may include a volatile memory or a non-volatile memory, or the memory 609 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data rate SDRAM, DDR SDRAM), an enhanced synchronous dynamic random access memory (Enhanced SDRAM, ESDRAM), a synchlink dynamic random access memory (Synch Link DRAM, SLDRAM), and a direct rambus random access memory (Direct Rambus RAM, DRRAM). The memory 609 in this embodiment of this application includes but is not limited to these and any other suitable types of memories.

The processor 610 may include one or more processing units. Optionally, the processor 610 integrates an application processor and a modem processor. The application processor mainly processes operations related to the operating system, a user interface, an application program, and the like. The modem processor mainly processes a wireless communication signal. For example, the modem processor is a baseband processor. It may be understood that the modem processor may alternatively be not integrated in the processor 610.

The processor 610 is configured to: in a case that a first hybrid automatic repeat request acknowledgement HARQ-ACK and a second HARQ-ACK are located in one time unit and that a codebook used by the first HARQ-ACK is a first codebook, generate HARQ-ACK information of the first HARQ-ACK and HARQ-ACK information of the second HARQ-ACK based on the first codebook, or generate HARQ-ACK information based on a priority of the first HARQ-ACK and a priority of the second HARQ-ACK.

The first codebook is a type 3 codebook or an enhanced type 3 codebook.

The first HARQ-ACK and the second HARQ-ACK are located in one time unit, and the codebook used by the first HARQ-ACK is the enhanced type 3 codebook, and the processor 610 is configured to perform at least one of the following:
if HARQ process identifiers corresponding to the enhanced type 3 codebook include all HARQ process identifiers corresponding to the second HARQ-ACK, generating the HARQ-ACK information of the first HARQ-ACK and the HARQ-ACK information of the second HARQ-ACK based on the enhanced type 3 codebook, or generating the HARQ-ACK information based on the priority of the first HARQ-ACK and the priority of the second HARQ-ACK; and
if HARQ process identifiers corresponding to the enhanced type 3 codebook do not include all HARQ process identifiers corresponding to the second HARQ-ACK, generating the HARQ-ACK information of the first HARQ-ACK based on the enhanced type 3 codebook, and generating the HARQ-ACK information of the second HARQ-ACK based on a second codebook, where the second codebook is a codebook used by the second HARQ-ACK as indicated by a network-side device.

The processor 610 is configured to perform at least one of the following:
in a case that the priority of the first HARQ-ACK is higher than or equal to the priority of the second HARQ-ACK, generating the HARQ-ACK information of the first HARQ-ACK and the HARQ-ACK information of the second HARQ-ACK based on the first codebook; and
in a case that the priority of the first HARQ-ACK is lower than the priority of the second HARQ-ACK, generating the HARQ-ACK information of the first HARQ-ACK based on the first codebook, and generating the HARQ-ACK information of the second HARQ-ACK based on the second codebook, where the second codebook is the codebook used by the second HARQ-ACK as indicated by the network-side device.

The processor 610 is configured to perform at least one of the following:
in a case that the priority of the first HARQ-ACK is equal to the priority of the second HARQ-ACK, generating the HARQ-ACK information of the first HARQ-ACK and the HARQ-ACK information of the second HARQ-ACK based on the first codebook; and
in a case that the priority of the first HARQ-ACK is not equal to the priority of the second HARQ-ACK, generating the HARQ-ACK information of the first HARQ-ACK based on the first codebook, and generating the HARQ-ACK information of the second HARQ-ACK based on the second codebook, where the second codebook is the codebook used by the second HARQ-ACK as indicated by the network-side device.

The radio frequency unit 601 is configured to: in a case that a first resource overlaps a second resource, transmit the HARQ-ACK information of the second HARQ-ACK by using the second resource; and
in a case that the first resource does not overlap the second resource, transmit the HARQ-ACK information of the first HARQ-ACK by using the first resource, and transmit the HARQ-ACK information of the second HARQ-ACK by using the second resource, where
the first resource is a transmission resource for the first HARQ-ACK; and
the second resource is a transmission resource for the second HARQ-ACK.

The radio frequency unit 601 is configured to perform at least one of the following:
determining a target resource based on whether the priority of the first HARQ-ACK is the same as the priority of the second HARQ-ACK, and transmitting the HARQ-ACK information by using the target resource; and
transmitting the HARQ-ACK information of the first HARQ-ACK by using a first resource, and transmitting the HARQ-ACK information of the second HARQ-ACK by using a second resource, where
the first resource is a transmission resource for the first HARQ-ACK; and
the second resource is a transmission resource for the second HARQ-ACK.

The radio frequency unit 601 is configured to perform at least one of the following:
in a case that the priority of the first HARQ-ACK is different from the priority of the second HARQ-ACK, if the first resource overlaps the second resource, using a resource for a HARQ-ACK with a higher priority as the target resource, and transmitting HARQ-ACK information of the HARQ-ACK with the higher priority by using the target resource;
in a case that the priority of the first HARQ-ACK is different from the priority of the second HARQ-ACK, if the first resource does not overlap the second resource, transmitting the HARQ-ACK information of the first HARQ-ACK by using the first resource, and transmitting the HARQ-ACK information of the second HARQ-ACK by using the second resource; and
in a case that the priority of the first HARQ-ACK is the same as the priority of the second HARQ-ACK, selecting the first resource, the second resource, or a third resource as the target resource, and transmitting, by using the target resource, information obtained by concatenating the HARQ-ACK information of the first HARQ-ACK and the HARQ-ACK information of the second HARQ-ACK, where the third resource is determined based on a quantity of bits in the information obtained through concatenation.

The processor 610 is configured to: based on a HARQ process identifier, in a case that a corresponding physical downlink shared channel PDSCH or physical downlink control channel PDCCH is received, generate acknowledgement or negative acknowledgement information according to a decoding result of the PDSCH or the PDCCH; or in a case that a corresponding PDSCH or PDCCH is not received, generate negative acknowledgement information.

The radio frequency unit 601 is configured to transmit the generated HARQ-ACK information of the first HARQ-ACK and HARQ-ACK information of the second HARQ-ACK by using a first resource, where
the first resource is a transmission resource for the first HARQ-ACK.

Optionally, the first HARQ-ACK is a unicast HARQ-ACK, and the second HARQ-ACK is a multicast HARQ-ACK.

In the case that the first HARQ-ACK and the second HARQ-ACK are located in one time unit and that the codebook used by the first HARQ-ACK is the first codebook, one manner is that the terminal generates the HARQ-ACK information of the first HARQ-ACK and the HARQ-ACK information of the second HARQ-ACK only based on the first codebook to reduce redundant information of the HARQ-ACK acknowledgement; and one manner is that the terminal generates the HARQ-ACK information based on the priority of the first HARQ-ACK and the priority of the second HARQ-ACK to ensure reliability of a higher-priority HARQ-ACK.

An embodiment of this application further provides a readable storage medium. The readable storage medium stores a program or instructions. When the program or instructions are executed by a processor, each process of the foregoing embodiment of the hybrid automatic repeat request acknowledgement processing method is implemented, with the same technical effect achieved. To avoid repetition, details are not described herein again.

The processor is a processor in the terminal in the foregoing embodiment. The readable storage medium includes a computer-readable storage medium, such as a computer read-only memory ROM, a random access memory RAM, a magnetic disk, or an optical disc.

In addition, an embodiment of this application provides a chip. The chip includes a processor and a communication interface. The communication interface is coupled to the processor. The processor is configured to run a program or instructions to implement each process of the foregoing embodiment of the hybrid automatic repeat request acknowledgement processing method, with the same technical effect achieved. To avoid repetition, details are not described herein again.

It should be understood that the chip provided in this embodiment of this application may also be referred to as a system-level chip, a system chip, a chip system, a system-on-chip, or the like.

In addition, an embodiment of this application provides a computer program or program product. The computer program or program product is stored in a storage medium. The computer program or program product is executed by at least one processor to implement each process of the foregoing embodiment of the hybrid automatic repeat request acknowledgement processing method, with the same technical effect achieved. To avoid repetition, details are not described herein again.

An embodiment of this application further provides a hybrid automatic repeat request acknowledgement processing system, including a terminal and a network-side device. The terminal may be configured to perform the steps of the foregoing hybrid automatic repeat request acknowledgement processing method.

It should be noted that in this specification, the term "comprise", "include", or any of their variants are intended to cover a non-exclusive inclusion, so that a process, a method, an article, or an apparatus that includes a list of elements not only includes those elements but also includes other elements that are not expressly listed, or further includes elements inherent to such process, method, article, or apparatus. In absence of more constraints, an element preceded by "includes a ..." does not preclude existence of other identical elements in the process, method, article, or apparatus that includes the element. In addition, it should be noted that the scope of the method and apparatus in the implementations of this application is not limited to performing the functions in an order shown or discussed, and may further include performing the functions in a substantially simultaneous manner or in a reverse order depending on the functions used. For example, the method described may be performed in an order different from that described, and various steps may be added, omitted, or combined. In addition, features described with reference to some examples may be combined in other examples.

According to the foregoing description of the implementations, a person skilled in the art may clearly understand that the methods in the foregoing embodiments may be implemented by using software in combination with a necessary general hardware platform, and certainly may alternatively be implemented by using hardware. However, in most cases, the former is a preferred implementation. Based on such an understanding, the technical solutions of this application essentially or the part contributing to the prior art may be implemented in a form of a computer software product. The computer software product is stored in a storage medium (such as a ROM/RAM, a magnetic disk, or an optical disc), and includes several instructions for instructing a terminal (which may be a mobile phone, a computer, a server, an air conditioner, a network device, or the like) to perform the methods described in the embodiments of this application.

The foregoing describes the embodiments of this application with reference to the accompanying drawings. However, this application is not limited to the foregoing specific embodiments. The foregoing specific embodiments are merely illustrative rather than restrictive. Inspired by this application, a person of ordinary skill in the art may develop many other manners without departing from principles of this application and the protection scope of the claims, and all such manners fall within the protection scope of this application.

## Claims

1. A hybrid automatic repeat request acknowledgement processing method, comprising:
in a case that a first hybrid automatic repeat request acknowledgement HARQ-ACK and a second HARQ-ACK are located in one time unit and that a codebook used by the first HARQ-ACK is a first codebook, generating, by a terminal, HARQ-ACK information of the first HARQ-ACK and HARQ-ACK information of the second HARQ-ACK based on the first codebook, or generating HARQ-ACK information based on a priority of the first HARQ-ACK and a priority of the second HARQ-ACK.

2. The method according to claim 1, wherein the first codebook is a type 3 codebook or an enhanced type 3 codebook.

3. The method according to claim 2, wherein the first HARQ-ACK and the second HARQ-ACK are located in one time unit, and the codebook used by the first HARQ-ACK is the enhanced type 3 codebook, and the method further comprises at least one of the following:
if HARQ process identifiers corresponding to the enhanced type 3 codebook comprise all HARQ process identifiers corresponding to the second HARQ-ACK, generating, by the terminal, the HARQ-ACK information of the first HARQ-ACK and the HARQ-ACK information of the second HARQ-ACK based on the enhanced type 3 codebook, or generating the HARQ-ACK information based on the priority of the first HARQ-ACK and the priority of the second HARQ-ACK; and
if HARQ process identifiers corresponding to the enhanced type 3 codebook do not comprise all HARQ process identifiers corresponding to the second HARQ-ACK, generating, by the terminal, the HARQ-ACK information of the first HARQ-ACK based on the enhanced type 3 codebook, and generating the HARQ-ACK information of the second HARQ-ACK based on a second codebook, wherein the second codebook is a codebook used by the second HARQ-ACK as indicated by a network-side device.

4. The method according to claim 1 or 3, wherein the generating, by the terminal, the HARQ-ACK information based on the priority of the first HARQ-ACK and the priority of the second HARQ-ACK comprises at least one of the following:
in a case that the priority of the first HARQ-ACK is higher than or equal to the priority of the second HARQ-ACK, generating, by the terminal, the HARQ-ACK information of the first HARQ-ACK and the HARQ-ACK information of the second HARQ-ACK based on the first codebook; and
in a case that the priority of the first HARQ-ACK is lower than the priority of the second HARQ-ACK, generating, by the terminal, the HARQ-ACK information of the first HARQ-ACK based on the first codebook, and generating the HARQ-ACK information of the second HARQ-ACK based on the second codebook, wherein the second codebook is the codebook used by the second HARQ-ACK as indicated by the network-side device.

5. The method according to claim 1 or 3, wherein the generating, by the terminal, the HARQ-ACK information based on the priority of the first HARQ-ACK and the priority of the second HARQ-ACK comprises at least one of the following:
in a case that the priority of the first HARQ-ACK is equal to the priority of the second HARQ-ACK, generating, by the terminal, the HARQ-ACK information of the first HARQ-ACK and the HARQ-ACK information of the second HARQ-ACK based on the first codebook; and
in a case that the priority of the first HARQ-ACK is not equal to the priority of the second HARQ-ACK, generating, by the terminal, the HARQ-ACK information of the first HARQ-ACK based on the first codebook, and generating the HARQ-ACK information of the second HARQ-ACK based on the second codebook, wherein the second codebook is the codebook used by the second HARQ-ACK as indicated by the network-side device.

6. The method according to claim 4, wherein the generating, by the terminal, the HARQ-ACK information of the first HARQ-ACK based on the first codebook, and generating the HARQ-ACK information of the second HARQ-ACK based on the second codebook further comprises:
in a case that a first resource overlaps a second resource, transmitting, by the terminal, the HARQ-ACK information of the second HARQ-ACK by using the second resource; and
in a case that the first resource does not overlap the second resource, transmitting, by the terminal, the HARQ-ACK information of the first HARQ-ACK by using the first resource, and transmitting the HARQ-ACK information of the second HARQ-ACK by using the second resource, wherein
the first resource is a transmission resource for the first HARQ-ACK; and
the second resource is a transmission resource for the second HARQ-ACK.

7. The method according to claim 3, wherein the generating, by the terminal, the HARQ-ACK information of the first HARQ-ACK based on the enhanced type 3 codebook, and generating the HARQ-ACK information of the second HARQ-ACK based on a second codebook further comprises at least one of the following:
determining, by the terminal, a target resource based on whether the priority of the first HARQ-ACK is the same as the priority of the second HARQ-ACK, and transmitting the HARQ-ACK information by using the target resource; and
transmitting, by the terminal, the HARQ-ACK information of the first HARQ-ACK by using a first resource, and transmitting the HARQ-ACK information of the second HARQ-ACK by using a second resource, wherein
the first resource is a transmission resource for the first HARQ-ACK; and
the second resource is a transmission resource for the second HARQ-ACK.

8. The method according to claim 7, wherein the determining, by the terminal, a target resource based on whether the priority of the first HARQ-ACK is the same as the priority of the second HARQ-ACK, and transmitting the target information by using the target resource comprises at least one of the following:
in a case that the priority of the first HARQ-ACK is different from the priority of the second HARQ-ACK, if the first resource overlaps the second resource, using, by the terminal, a resource for a HARQ-ACK with a higher priority as the target resource, and transmitting HARQ-ACK information of the HARQ-ACK with the higher priority by using the target resource;
in a case that the priority of the first HARQ-ACK is different from the priority of the second HARQ-ACK, if the first resource does not overlap the second resource, transmitting, by the terminal, the HARQ-ACK information of the first HARQ-ACK by using the first resource, and transmitting the HARQ-ACK information of the second HARQ-ACK by using the second resource; and
in a case that the priority of the first HARQ-ACK is the same as the priority of the second HARQ-ACK, selecting, by the terminal, the first resource, the second resource, or a third resource as the target resource, and transmitting, by using the target resource, information obtained by concatenating the HARQ-ACK information of the first HARQ-ACK and the HARQ-ACK information of the second HARQ-ACK, wherein the third resource is determined based on a quantity of bits in the information obtained through concatenation.

9. The method according to claim 1, wherein the generating, by a terminal, HARQ-ACK information of the first HARQ-ACK and HARQ-ACK information of the second HARQ-ACK based on the first codebook comprises:
based on a HARQ process identifier, in a case that a corresponding physical downlink shared channel PDSCH or physical downlink control channel PDCCH is received, generating, by the terminal, acknowledgement or negative acknowledgement information according to a decoding result of the PDSCH or the PDCCH; or in a case that a corresponding PDSCH or PDCCH is not received, generating negative acknowledgement information.

10. The method according to claim 1, wherein the generating, by a terminal, HARQ-ACK information of the first HARQ-ACK and HARQ-ACK information of the second HARQ-ACK based on the first codebook further comprises:
transmitting, by the terminal, the generated HARQ-ACK information of the first HARQ-ACK and HARQ-ACK information of the second HARQ-ACK by using a first resource, wherein
the first resource is a transmission resource for the first HARQ-ACK.

11. The method according to claim 1, wherein the first HARQ-ACK is a unicast HARQ-ACK, and the second HARQ-ACK is a multicast HARQ-ACK.

12. A hybrid automatic repeat request acknowledgement processing apparatus, comprising:
a first processing module, configured to: in a case that a first HARQ-ACK and a second HARQ-ACK are located in one time unit and that a codebook used by the first HARQ-ACK is a first codebook, generate HARQ-ACK information of the first HARQ-ACK and HARQ-ACK information of the second HARQ-ACK based on the first codebook, or generate HARQ-ACK information based on a priority of the first HARQ-ACK and a priority of the second HARQ-ACK.

13. The apparatus according to claim 12, wherein the first codebook is a type 3 codebook or an enhanced type 3 codebook.

14. The apparatus according to claim 13, wherein the first HARQ-ACK and the second HARQ-ACK are located in one time unit, and the codebook used by the first HARQ-ACK is the enhanced type 3 codebook, and the apparatus further comprises:
a second processing module, configured to: if HARQ process identifiers corresponding to the enhanced type 3 codebook comprise all HARQ process identifiers corresponding to the second HARQ-ACK, generate the HARQ-ACK information of the first HARQ-ACK and the HARQ-ACK information of the second HARQ-ACK based on the enhanced type 3 codebook, or generate the HARQ-ACK information based on the priority of the first HARQ-ACK and the priority of the second HARQ-ACK; or
if HARQ process identifiers corresponding to the enhanced type 3 codebook do not comprise all HARQ process identifiers corresponding to the second HARQ-ACK, generate the HARQ-ACK information of the first HARQ-ACK based on the enhanced type 3 codebook, and generate the HARQ-ACK information of the second HARQ-ACK based on a second codebook, wherein the second codebook is a codebook used by the second HARQ-ACK as indicated by a network-side device.

15. The apparatus according to claim 12 or 14, wherein the generating the HARQ-ACK information based on the priority of the first HARQ-ACK and the priority of the second HARQ-ACK comprises at least one of the following:
in a case that the priority of the first HARQ-ACK is higher than or equal to the priority of the second HARQ-ACK, generating the HARQ-ACK information of the first HARQ-ACK and the HARQ-ACK information of the second HARQ-ACK based on the first codebook; and
in a case that the priority of the first HARQ-ACK is lower than the priority of the second HARQ-ACK, generating the HARQ-ACK information of the first HARQ-ACK based on the first codebook, and generating the HARQ-ACK information of the second HARQ-ACK based on the second codebook, wherein the second codebook is the codebook used by the second HARQ-ACK as indicated by the network-side device.

16. The apparatus according to claim 12 or 14, wherein the generating the HARQ-ACK information based on the priority of the first HARQ-ACK and the priority of the second HARQ-ACK comprises at least one of the following:
in a case that the priority of the first HARQ-ACK is equal to the priority of the second HARQ-ACK, generating the HARQ-ACK information of the first HARQ-ACK and the HARQ-ACK information of the second HARQ-ACK based on the first codebook; and
in a case that the priority of the first HARQ-ACK is not equal to the priority of the second HARQ-ACK, generating the HARQ-ACK information of the first HARQ-ACK based on the first codebook, and generating the HARQ-ACK information of the second HARQ-ACK based on the second codebook, wherein the second codebook is the codebook used by the second HARQ-ACK as indicated by the network-side device.

17. The apparatus according to claim 15, further comprising:
a first transmission module, configured to: in a case that a first resource overlaps a second resource, transmit the HARQ-ACK information of the second HARQ-ACK by using the second resource; and
a second transmission module, configured to: in a case that the first resource does not overlap the second resource, transmit the HARQ-ACK information of the first HARQ-ACK by using the first resource, and transmit the HARQ-ACK information of the second HARQ-ACK by using the second resource, wherein
the first resource is a transmission resource for the first HARQ-ACK; and
the second resource is a transmission resource for the second HARQ-ACK.

18. The apparatus according to claim 14, further comprising at least one of the following:
a third transmission module, configured to determine a target resource based on whether the priority of the first HARQ-ACK is the same as the priority of the second HARQ-ACK, and transmit the HARQ-ACK information by using the target resource; and
a fourth transmission module, configured to transmit the HARQ-ACK information of the first HARQ-ACK by using a first resource, and transmit the HARQ-ACK information of the second HARQ-ACK by using a second resource, wherein
the first resource is a transmission resource for the first HARQ-ACK; and
the second resource is a transmission resource for the second HARQ-ACK.

19. The apparatus according to claim 18, wherein the third transmission module is further configured to perform at least one of the following:
in a case that the priority of the first HARQ-ACK is different from the priority of the second HARQ-ACK, if two PUCCH time domain resources overlap, using a resource for a HARQ-ACK with a higher priority as the target resource, and transmitting HARQ-ACK information of the HARQ-ACK with the higher priority by using the target resource;
in a case that the priority of the first HARQ-ACK is different from the priority of the second HARQ-ACK, if two PUCCH time domain resources do not overlap, transmitting the HARQ-ACK information of the first HARQ-ACK by using the first resource, and transmitting the HARQ-ACK information of the second HARQ-ACK by using the second resource; and
in a case that the priority of the first HARQ-ACK is the same as the priority of the second HARQ-ACK, selecting the first resource, the second resource, or a third resource as the target resource, and transmitting, by using the target resource, information obtained by concatenating the HARQ-ACK information of the first HARQ-ACK and the HARQ-ACK information of the second HARQ-ACK, wherein the third resource is determined based on a quantity of bits in the information obtained through concatenation.

20. The apparatus according to claim 12, wherein the first processing module comprises:
a first processing submodule, configured to: based on a HARQ process identifier, in a case that a corresponding physical downlink shared channel PDSCH or physical downlink control channel PDCCH is received, generate acknowledgement or negative acknowledgement information according to a decoding result of the PDSCH or the PDCCH; or in a case that a corresponding PDSCH or PDCCH is not received, generate negative acknowledgement information.

21. The apparatus according to claim 12, further comprising:
a fifth transmission module, configured to transmit the generated HARQ-ACK information of the first HARQ-ACK and HARQ-ACK information of the second HARQ-ACK by using a first resource, wherein
the first resource is a transmission resource for the first HARQ-ACK.

22. The apparatus according to claim 12, wherein the first HARQ-ACK is a unicast HARQ-ACK, and the second HARQ-ACK is a multicast HARQ-ACK.

23. A terminal, comprising a processor and a memory, wherein the memory stores a program or instructions capable of running on the processor, and when the program or instructions are executed by the processor, the steps of the hybrid automatic repeat request acknowledgement processing method according to any one of claims 1 to 11 are implemented.

24. A readable storage medium, wherein the readable storage medium stores a program or instructions, and when the program or instructions are executed by a processor, the steps of the hybrid automatic repeat request acknowledgement processing method according to any one of claims 1 to 11 are implemented.
